# EUROPEAN PATENT SPECIFICATION

(11) **EP 4 038 917 B1**
(45) Date of publication and mention of the grant of the patent: **30.08.2023**
(21) Application number: 20796976.7
(22) Date of filing: 02.10.2020
(51) Int. Cl.: H04W 8/00, H04W 76/14, H04W 88/04, H04W 48/16

(54) **DEVICE TO DEVICE SERVICE DISCOVERY VIA A RELAY DEVICE**
GERÄT-ZU-GERÄT DIENSTERKENNUNG ÜBER EINE RELAISVORRICHTUNG
DÉCOUVERTE DE SERVICES DE DISPOSITIF À DISPOSITIF PAR UN DISPOSITIF RELAIS

(30) Priority: 03.10.2019 US 201962910067 P
(43) Date of publication of application: 10.08.2022
(73) Proprietor: InterDigital Patent Holdings, Inc., Wilmington, DE 19809 (US)
(72) Inventor: FERDI, Samir, Kirkland, Quebec H9H 3V9 (CA); AHMAD, Saad, Montreal, Quebec H2X 0B3 (CA); SHI, Xiaoyan, Westmount, Quebec H3Z 1T1 (CA); PERRAS, Michelle, Montreal, Quebec H2J 3G5 (CA); BRUSILOVSKY, Alec, Downingtown, PA 19335 (US)
(74) Representative: AWA Sweden AB
(86) International application number: PCT/US2020/053881
(87) International publication number: WO 2021/067653

(56) References cited:
- EP-A2- 3 043 583
- US-B2- 10 313 867

## Description

### CROSS-REFERENCE TO RELATED APPLICATIONS

This application claims the benefit of U.S. Provisional Application No. 62/910,067, filed October 3, 2019.

### BACKGROUND

Wireless communication devices may establish communications with other devices and data networks via access networks. For example, a wireless communication device may establish communications via a 3GPP radio access network (RAN). A wireless communication device may access a 3GPP network in order to communicate with other wireless devices and to access data networks.

Wireless communication devices may execute applications that leverage various services. These applications and services may be intended for simultaneous use by multiple users. Wireless communication devices may benefit from being able to locate other communication devices in connection with executing a particular application or service.

Prior art is US 10 313 867 B2 and EP 3 043 583 A2.

### SUMMARY

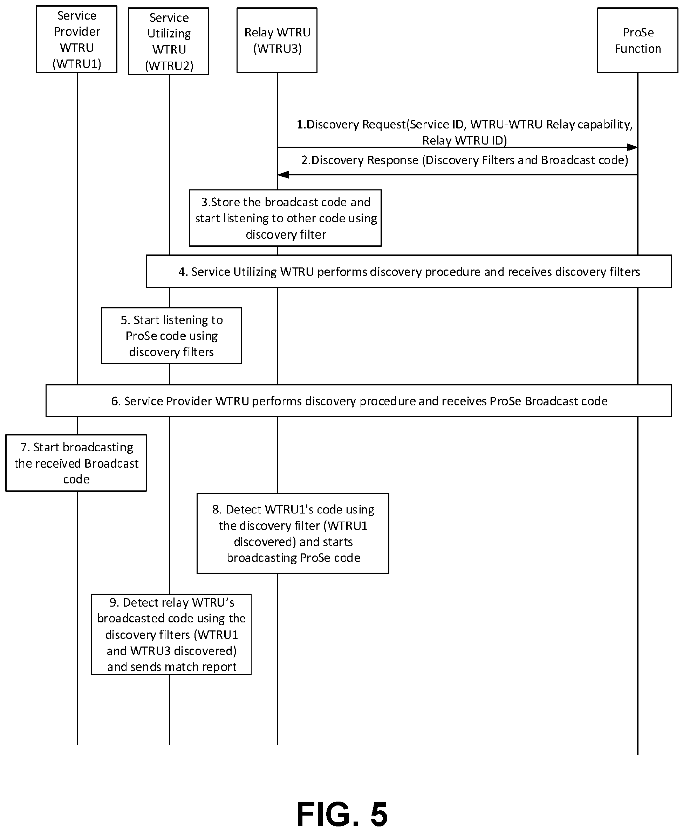

The invention is defined by ***all*** features present in and required by the independent claims 1 and 14 which define the scope of the invention. Further features of exemplary embodiments are defined in dependent claims. The subject-matter of figure 5 and its descriptions is according to the claimed invention as defined in the claims. The subject-matter of the rest of the description and figures, even if described or named as "embodiment(s)", "invention(s)", "aspect(s)", "example(s)" or "disclosure(s)" etc., does not or does not fully and thus only partly correspond to the invention as defined in the claims (e.g. due to one or more features present in and required by the independent claims which are missing in the "embodiment(s)", "invention(s)", "aspect(s)", "example(s)" or "disclosure(s)" etc., for example due to the use of expressions like "or", "alternative", "alternatively, "may", "preferably", "optional(ly)", "can", "could", "as an/for example" etc. replacing one or more features present in and required by the independent claims and/or rendering one or more features present in and required by the independent claims as optional) and is therefore either not falling within the subject-matter for which protection is sought, or is not encompassed by the wording of the claims but is considered as useful for understanding the invention.

Systems, methods, and instrumentalities are disclosed herein associated with mobile device service discovery via a relay device. A wireless transmit and receive unit (WTRU) may communicate a discovery request. The discovery request may indicate that the WTRU is configured to operate as a relay for discovery of at least one service. The WTRU may receive a discovery response. The discovery response may comprise at least one discovery filter and at least one relay service broadcast code. The WTRU monitors for service broadcast codes. If the WTRU detects a service broadcast code that satisfies the at least one discovery filter, the WTRU broadcasts the at least one relay service broadcast code.

A relay device, which may be, for example, a relay WTRU, may send a discovery request to a network entity, e.g., such as a proximity services (ProSe) server. A discovery request may include, for example, a service identifier (ID), a WTRU-WTRU relay capability indication (e.g., an information element indicating the relay WTRU is configured to operate as a relay for discovery of at least one service), and/or a relay WTRU ID. The relay WTRU may receive a discovery response (e.g., from the ProSe server). The discovery response may include, for example, at least one service (e.g., ProSe service) broadcast code, which may be referred to as a relay service broadcast code, and at least one discovery filter (e.g., corresponding to the service ID). The relay WTRU may use the at least one discovery filter to listen for at least one ProSe code, which may be referred to as service broadcast code, broadcasted (e.g., on a PC5 interface) by at least one service provider WTRU. The relay WTRU may determine that a received broadcast code (service broadcast code) matches or otherwise satisfies the at least one discovery filter (e.g., received in the discovery response and used to monitor for broadcast codes). The relay WTRU may broadcast the relay service (e.g., ProSe service) broadcast code (e.g., received in the discovery response from the ProSe server), for example, based on the match (e.g., the received broadcast ProSe service code corresponds to the service ID for a service provided by the service provider WTRU, as may be indicated by a discovery filter match). The (e.g., ProSe) relay service broadcast code broadcast by the relay WTRU may be intended for receipt by a service utilizing WTRU, which may utilize the relay WTRU to receive a service from a service provider WTRU,

A relay WTRU may request and broadcast a ProSe relay code (relay service broadcast code) for a ProSe relay service. The relay WTRU may monitor ProSe services to be relayed and may report the available ProSe services to be relayed to a ProSe function. A service utilizing WTRU may determine to discover a ProSe service. A service utilizing WTRU may query the ProSe function for a ProSe relay code of a relay WTRU that is configured to relay the ProSe service. The Relay WTRU may be configured to relay the ProSe service. The relay WTRU may discover a ProSe service. The service utilizing WTRU may discover the Relay WTRU, for example, by listening for the ProSe relay code.

A relay WTRU may be configured to perform discovery actions (e.g., an open direct discovery procedure). The relay WTRU may receive a discovery response, which may include a relay ProSe app code, a relay discovery key, a ProSe app code, and/or a discovery key from a ProSe function. The relay WTRU may perform a security check (e.g., using the discovery key) on messages, which may include the ProSe app code. The relay WTRU may transmit the relay ProSe app in a second message protected using the relay discovery key, for example, if the first message passes a security check.

A monitoring WTRU may (e.g., determine to) discover an announcing WTRU, for example, if/when the monitoring WTRU is in range of the announcing WTRU and a relay WTRU, The monitoring WTRU may send a relay preference indication in a discovery request. The monitoring WTRU may receive a relay match report (RMR) transmit timer (e.g., a timer value) in a discovery response. The monitoring WTRU may delay (e.g., by the timer value) the transmission of a match report (e.g., using the RMR transmit timer), for example, if the monitoring WTRU detects that the relay ProSe app code is from a relay WTRU, The monitoring WTRU may transmit the match report (e.g., including a relay ProSe app code from the relay WTRU), for example, if the RMR transmit timer expires. The monitoring WTRU may transmit (e.g., immediately or without delay) a match report, for example, if the monitoring WTRU detects the ProSe app code from the announcing WTRU, and the monitoring WTRU may stop the RMR transmit timer (e.g., if the timer is running).

This Summary is provided to introduce a selection of concepts in a simplified form that are further described herein in the Detailed Description. This Summary is not intended to limit the scope of the claimed subject matter. Other features are described herein.

### BRIEF DESCRIPTION OF THE DRAWINGS

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 depicts an example implementation for direct service discovery.
FIG. 3 depicts example WTRU to WTRU communication via a Relay WTRU.
FIG. 4 depicts an example associated with for service discovery.
FIG. 5 depicts an example associated with for service discovery via a Relay WTRU.
FIG. 6 depicts an example associated with for service discovery via a Relay WTRU,
FIG. 7 depicts an example associated with for secure service discovery via a Relay WTRU,
FIG. 8 depicts an example associated with for service discovery via a Relay WTRU.
FIG. 9 depicts an example associated with for service discovery.

### DETAILED DESCRIPTION

Systems, methods, and instrumentalities are disclosed (e.g., via example implementations) that are associated with WTRU to WTRU discovery via a relay WTRU. A relay WTRU may send a discovery request to a network entity, e.g., a ProSe server (which may be used as an example herein) or a similar network node, e.g., PCF, DDNMF, etc. The request may include, for example, a service ID, a relay capability indication, and/or a relay WTRU ID. The relay WTRU may receive a response, which may include a broadcast code and a discovery filter corresponding to the service ID. The relay WTRU may use the discovery filter to listen for a ProSe code broadcasted by a service provider WTRU. The relay WTRU may detect a ProSe code corresponding to the service provider WTRU. The relay WTRU may broadcast the ProSe code received from the ProSe server. A service utilizing WTRU that is listening to the relay WTRU may receive the ProSe code and may utilize the relay WTRU to request to use the service from the service provider WTRU.

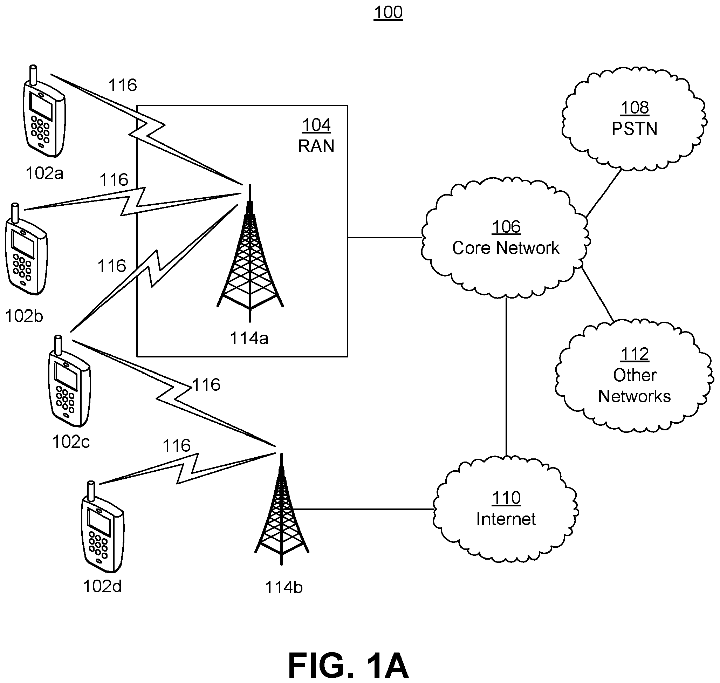

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an encode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR),

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR, etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d, The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

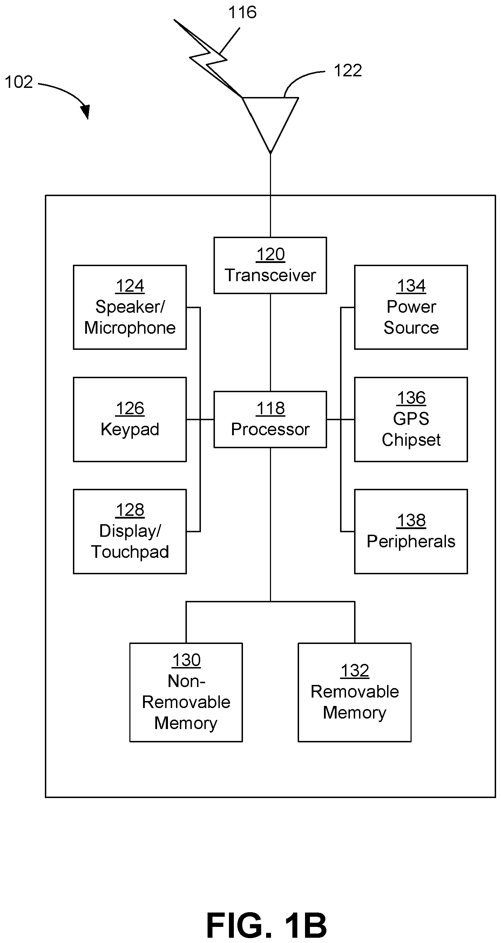

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134 and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

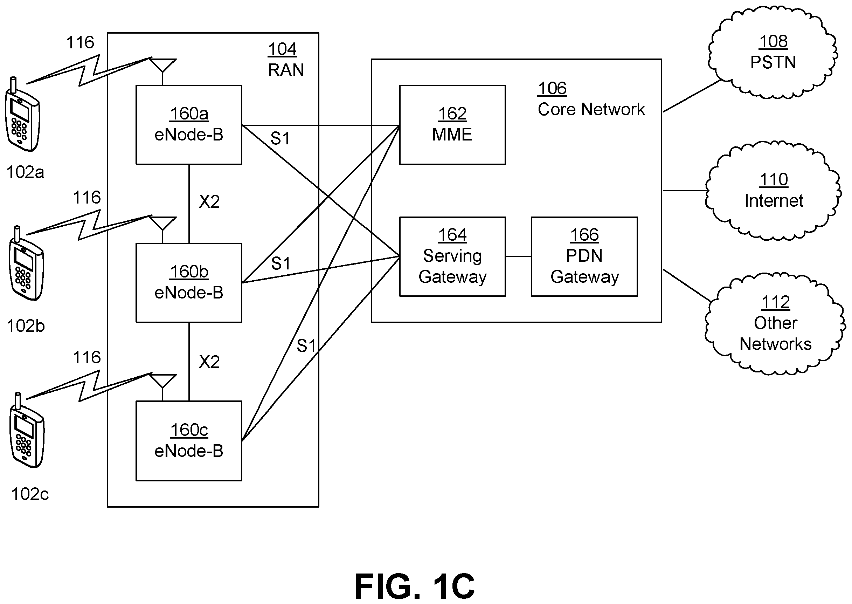

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a,

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166, While each of the foregoing elements is depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c, The SGW 164 may perform other functions, such as anchoring user planes during intereNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP, The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.1 1ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

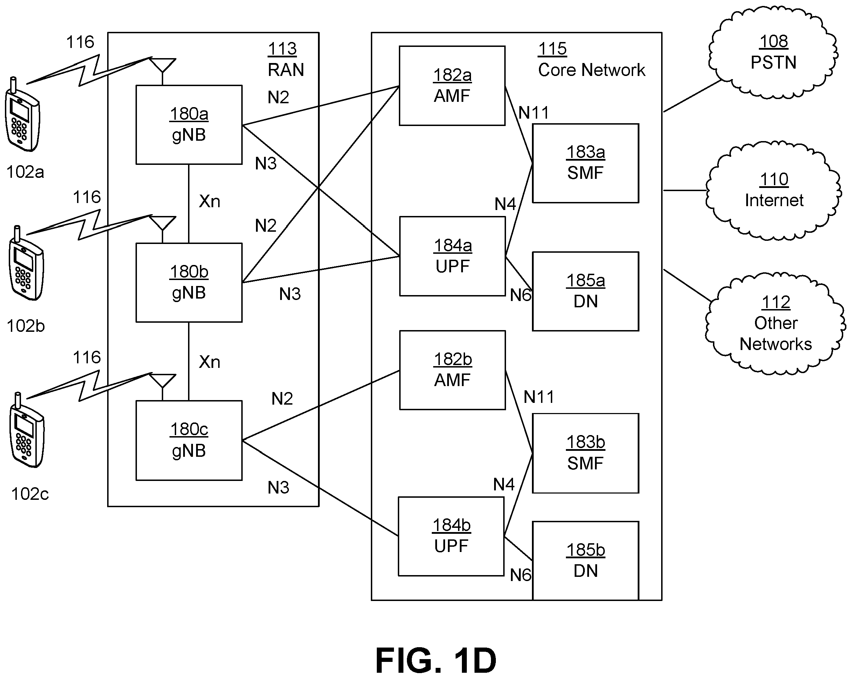

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c, For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Systems, methods, and instrumentalities are disclosed herein associated with WTRU to WTRU discovery via a relay WTRU. A relay WTRU may send a discovery request to network entity, e.g., a proximity services (ProSe) server, which may be used as an example herein. The discovery request may include, for example, a service identifier (ID), a relay capability indication, and/or a relay WTRU ID. The relay WTRU may receive a response, which may include a broadcast code and/or a discovery filter corresponding to the service ID. The broadcast code may be a relay service broadcast code. The relay WTRU may use the discovery filter to listen for a ProSe code, which may be broadcasted by a service provider WTRU. The relay WTRU may broadcast the ProSe code received from the ProSe server, for example, if the relay WTRU detects the ProSe code corresponding to the service provider WTRU matches a ProSe code received from the ProSe server (e.g., by using the received discovery filter). A service utilizing WTRU may listen to the relay WTRU and may receive the ProSe code. The service utilizing WTRU may utilize the relay WTRU to request the service from the service provided WTRU, for example, based on receiving (e.g., and using) the ProSe code.

There may be multiple types or models of service discovery. Two example models are described (e.g., before introduction of a relay). Although some feature(s) herein may be described with respect to a given model, the feature(s) may be used in implementations regardless of model where appropriate. A first model for (e.g., direct) service discovery, which may be referred to as "Model A" or "Open Discovery," may be based on an announcement (e.g., a declaration, such as "I am here"). Service-enabled (e.g., ProSe-enabled) WTRU's may include, for example, an announcing WTRU and a monitoring WTRU. ProSe-enabled WTRUs that are participating in ProSe direct discovery may have one or more roles. A first role for a WTRU may be to operate as an announcing WTRU, which may include announcing certain information that may be used by WTRUs in proximity, such as by WTRUs that have permission to discover other devices. A second role for a WTRU may be to operate as a monitoring WTRU, which may include monitoring certain information of interest (e.g., while in proximity to one or more announcing WTRUs). An announcing WTRU may broadcast discovery messages at pre-defined discovery intervals. Monitoring WTRUs that are interested in broadcast messages may read and process the broadcast messages they receive. An announcement/declaration in Model A may be equivalent to an "I am here" paradigm, for example, if the announcing WTRU broadcasts information about itself (e.g., a ProSe application identity and/or a ProSe WTRU identity) in the discovery message.

A second model for (e.g., direct) service discovery, which may be referred to as "Model B," may be based on a request (e.g., seeking a response, such as asking "who is there?" or "are you there?"). Service-enabled (e.g., ProSe-enabled) WTRUs (e.g., that may participate in ProSe direct discovery) may have one or more (e.g., two) roles. A first role for a WTRU may be to operate as a discoverer WTRU, which may transmit a request. The request may include information about what the discoverer WTRU (e.g., an application executing therein) may be interested in discovering or seeks to discover, for example, from one or more WTRUs in proximity. A second role for a WTRU may be to operate as a discoveree WTRU, which may receive a request message from one or more discoverer WTRUs and may respond, for example, with information that may be related to a discoverer's request.

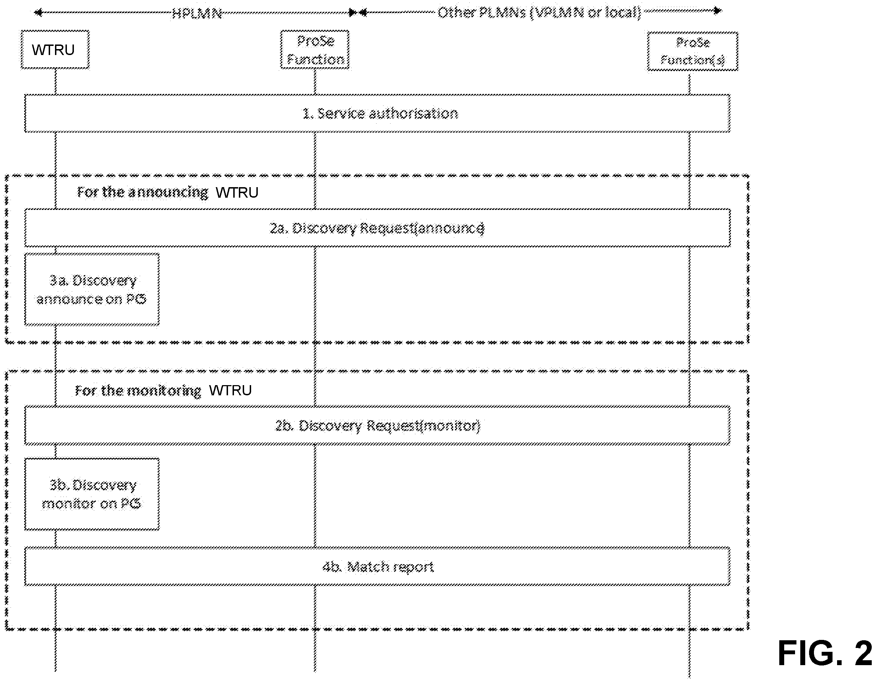

FIG. 2 depicts an example implementation for direct service discovery. The example shown in FIG. 2 may be consistent with Model A. Referring to FIG. 2, at 1, a WTRU may obtain from a ProSe function (e.g., via a device management (DM) procedure) authorization to announce and/or monitor in a particular public land mobile network (PLMN).

At 2a, the WTRU may send a discovery announce request (e.g., via a PC3 reference point) to the ProSe function, for example, if the WTRU is authorized to announce. The request may identify the service that the WTRU determined to advertise. Identification of a service may be provided, for example, by a ProSe application ID. The ProSe function may provide a ProSe application code for the WTRU to announce, for example, if the ProSe function determines announcing by the WTRU is authorized.

At 2b, the WTRU may send a discovery monitor request (e.g., via a PC3 reference point) to the ProSe function, for example, if the WTRU is authorized to monitor in a particular PLMN. The request may include, for example, the service that the WTRU is requesting to discover/monitor (e.g., using a ProSe application ID). The ProSe function may provide to the WTRU a ProSe application code to monitor, for example, if the ProSe Function determines the monitoring is authorized.

A WTRU may communicate with another WTRU via a relay WTRU. For example, proximity services (ProSe) may include WTRU to WTRU communication via a relay WTRU (e.g., in a 5G network). A WTRU may discover another WTRU, for example, using Model A, Model B, or another discovery procedure or mechanism. A WTRU may communicate with the discovered other WTRU, for example, via a relay WTRU located communicatively between the WTRUs.

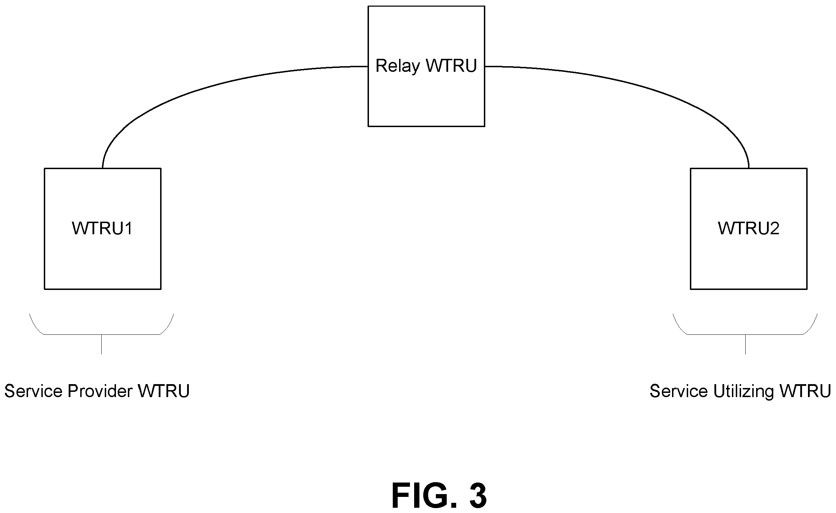

FIG. 3 depicts an example of WTRU to WTRU communication via a relay WTRU. FIG. 3 shows three types of WTRUs. A service provider WTRU (WTRU1) may offer a service that may be discoverable by other WTRUs (e.g., by searching for one or more available services). Examples of services that may be provided by a service provider WTRU may include, for example, restaurant service, taxi service, gaming console, gaming controller, etc. A service provider WTRU may announce services that it provides and may be referred to as an announcing WTRU or A-WTRU.

A service utilizing WTRU (WTRU2) may search for one or more available services, which may include the services offered by the service provider WTRU. There may be more than one service utilizing WTRU, one or more of which may attempt to discover available services, which may include provided by one or more (e.g., a particular) service provider WTRU. Examples of a service utilizing WTRU may include, for example, a WTRU that provides one or more application(s) (apps) that may be used by a restaurant customer or a taxi passenger, a WTRU that provides a gaming controller for a user, an augmented reality (AR) and/or virtual reality (VR) headset that may be used by a user, etc. A service utilizing WTRU may monitor for service announcements from other WTRUs and may be referred to as a monitoring WTRU or M-WTRU.

A relay WTRU may assist or relay discovery messages and PC5 data communication between the service provider WTRU and the service utilizing WTRU. A relay WTRU may, for example, act as a proxy between the service providing and utilizing WTRUs for discovery and communication and/or the relay WTRU may transparently relay the messages between the service providing and utilizing WTRUs. A relay WTRU may be involved in a discovery process between a service provider WTRU and a service utilizing WTRU. A relay WTRU may be referred to as a WTRU to WTRU relay or R-WTRU.

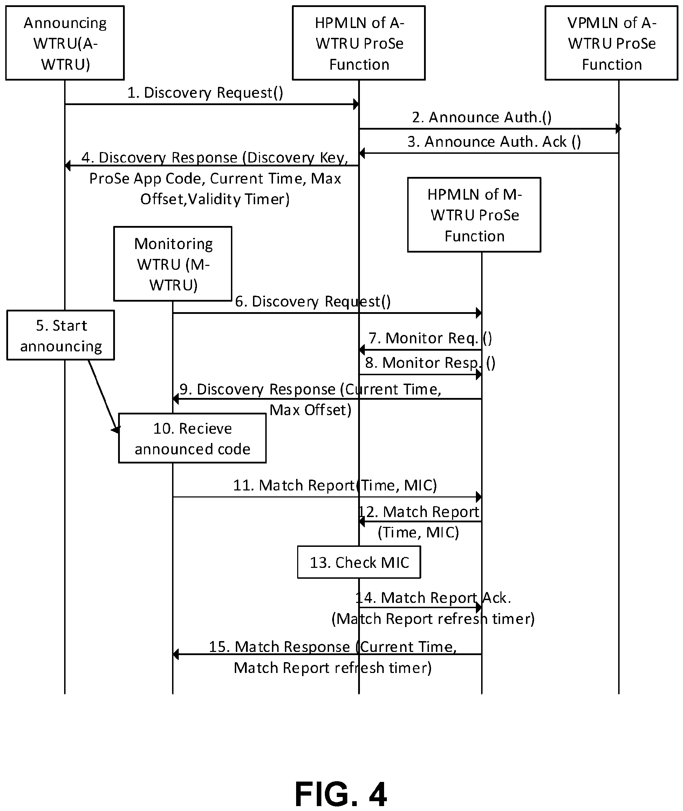

FIG. 4 depicts an example implementation for a discovery procedure. FIG. 4 shows an example of providing integrity protection for a transmitted code. For example, security procedures for ProSe open discovery (e.g., Model A) may provide integrity and replay protection for discovery messages that may be transmitted (e.g., over a PC5 interface) by an announcing WTRU and may be received by a monitoring WTRU. An announcing WTRU may be provisioned with, for example, a ProSe application (app) code, a discovery key, and/or time related parameters. An announcing WTRU may be provisioned, for example, via a discovery transaction (e.g., over a PC3 interface) with the announcing WTRU's home PLMN (HPLMN) ProSe function. A discovery transaction may include, for example, a discovery request and response. An announcing WTRU may announce the ProSe app code (e.g., to one or more monitoring WTRUs), for example, in a PC5 message. An announcing WTRU may compute a message integrity check (MIC) over the message, for example, using the discovery key and a time (e.g., coordinated universal time (UTC)) based counter. The announcing WTRU may transmit the MIC, for example, along with the message. A monitoring WTRU may detect the ProSe app code broadcast by an announcing WTRU, for example, using a filter, which may be provisioned by the monitoring WTRU's HPLMN ProSe function. A monitoring WTRU may send the code and/or the MIC (e.g., received in the detected broadcast), for example, in a match report message (e.g., over a PC3 interface) to the monitoring WTRU's HPLMN ProSe function for validation. The monitoring WTRU may receive a report match acknowledgement (Ack), which may confirm that the discovery message from the announcing WTRU passed one or more integrity checks by the ProSe function.

A discovery procedure in evolved packet core (EPC) ProSe may use a ProSe app ID (e.g., in Model A discovery). WTRUs may discover each other on a per service basis, for example, using a ProSe app ID. A discovery procedure (e.g., the same or similar discovery procedure that may be used in Model A) may apply to ProSe WTRU to WTRU discovery via a relay WTRU (e.g., in 5G). A first WTRU (e.g., a service provider WTRU) and a second WTRU (e.g., a service utilizing WTRU) may determine to discover each other (e.g., before service data may be exchanged). A first WTRU and a second WTRU that may not be in communicative range of each other may utilize assistance from a relay WTRU to (e.g., be able to) discover each other. The first WTRU and the second WTRU may (e.g., in addition to discovering each other) perform a discovery procedure with the Relay WTRU. Systems, methods, and instrumentalities are disclosed herein (e.g., via multiple example implementations) for the first WTRU, second WTRU, and relay WTRU to discover each other (e.g., for purposes of accessing a particular service).

Security may be provided for WTRU to WTRU relay discovery. A relay WTRU (R-WTRU) that participates in a discovery procedure with an announcing WTRU (A-WTRU) and a monitoring WTRU (M-WTRU) may determine whether (e.g., ensure that) a (e.g., PC5) discovery message from an announcing WTRU (A-WTRU) passes an integrity check and/or a freshness check (e.g., for replay protection), for example, before the relay WTRU may operate as a relay for a corresponding ProSe application. The Relay WTRU (R-WTRU) may verify that an announcing WTRU (A-WTRU) is authorized to transmit a discovery code for a service, for example, before the R-WTRU begins relaying discovery for the service.

A relay WTRU may (e.g., determine to) protect, e.g., for integrity and freshness, messages before transmission (e.g., over a PC5 interface), for example, to enable a monitoring WTRU to validate that the relay WTRU is authorized to transmit a discovery code and act as a relay for a service. Systems, methods, and instrumentalities are disclosed herein (e.g., via example implementations) for a relay WTRU to perform integrity/replay protection and verification of transmitted codes during a discovery procedure.

A monitoring WTRU may be in proximity to both an announcing WTRU and a relay WTRU. A (e.g., direct) discovery of the announcing WTRU by the monitoring WTRU (e.g., without using the relay WTRU) may be available. A monitoring WTRU (M-WTRU) may be enabled to (e.g., directly) discover an announcing WTRU provided service and establish (e.g., direct) communication (e.g., via PC5) with an announcing WTRU without going through a relay WTRU. Use of a relay WTRU while in range of an announcing WTRU may incur unnecessary signaling, delay in communications, and resource usage. A monitoring WTRU may prioritize direct communication over relayed communication with an announcing WTRU, Systems, methods, and instrumentalities are disclosed herein (e.g., via example implementations) for a service discover, where a monitoring WRTU may prioritize (e.g., deterministically prioritize) direct discovery of an announcing WTRU over (e.g., indirect) discovery of the announcing WTRU via a relay WRTU, for example, if the monitoring WTRU is in range of both the announcing WTRU and the relay WTRU,

Discovery implementation(s) may employ action(s), such as action(s) performed by an entity/function at an entity, which may be illustrated herein using a ProSe function or ProSe Server. A ProSe function may be a network function or a node that is part of a network (e.g., a 5G core network). A ProSe function may be a separate or distinct network function or ProSe functionality and in examples behavior may be split or distributed across different network functions (e.g., in a core network). In some examples, a policy control function (PCF) may be responsible for (e.g., may provide) ProSe configuration provisioning while an access and mobility management function (AMF) or a session management function (SMF) may be responsible for a ProSe discovery procedure. Interaction between a WTRU and a ProSe function (e.g., a network) may use the control plane path. A WTRU may (e.g., additionally and/or alternatively) interact with a ProSe function over the user plane.

FIG. 5 depicts an example associated with WTRU to WTRU discovery via a relay WTRU. The example implementation shown in FIG. 5 may be consistent with Model A. FIG. 5 shows an example discovery process where a service utilizing WTRU (WTRU2) may discover a service provider WTRU (WTRU1) via a relay WTRU (WTRU3).

Referring to FIG. 5, at 1, the relay WTRU (WTRU3) sends a discovery request to a network function/entity (e.g., a ProSe function). The discovery request may include the service ID of the service for which the relay may perform/operate as a relay. For example, the discovery request may include a service ID for a ProSe application for which the relay WTRU may operate as a relay. The service ID for the ProSe application may be a ProSe application ID. A discovery request may include a relay WTRU ID (relay identifier) that identifies the relay WTRU (e.g., a subscription permanent identifier (SUPI), a ProSe relay ID, an international mobile subscriber identifier (IMSI), etc.). The discovery request includes, according to the invention, an indication (e.g., an information element) that the relay WTRU is configured to and/or is acting as a relay WTRU for a (e.g., particular or identified) service. The indication (e.g., information element) may indicate a WTRU-WTRU relay capability. A relay WTRU may (e.g., simultaneously or concurrently) operate as a relay for multiple services. A discovery request (e.g., a message) may include multiple service IDs (e.g., multiple ProSe application IDs). An indication of a capability to serve as a relay may inform the network that the relay WTRU may and/or is (e.g., simultaneously) operating or acting as a relay for multiple services.

At 2, a ProSe function responds with a discovery response which is received by the relay WTRU, for example, after processing the discovery request message from the relay WTRU. A discovery response message includes, according to the invention, a ProSe broadcast code and a discovery filter for a service that has been identified in the discovery request. The broadcast code is a ProSe relay code and is, according to the invention, a relay service broadcast code. The discovery response may include multiple ProSe broadcast codes (relay service broadcast codes) and discovery filters, for example, if the discovery request identified multiple services for which the relay WTRU may operate as a relay. The discovery response may include one or more broadcast rules and includes the relay service broadcast code and one or more discovery filters for a (e.g., each) service identified in the discovery request. Not according to the invention, the ProSe function may (e.g., determine to) not assign a broadcast code (relay service broadcast code) and/or a discovery filter for one or more services for which a request was made (e.g., by the relay WTRU) but denied (e.g., by the ProSe function). Not according to the invention, a discovery response may include an indication (e.g., a rejection code, a cause code, or an information element) for the services for which the ProSe function did not assign a broadcast code (relay service broadcast code) and/or a discovery filter. Not according to the invention, a discovery response may associate a rejection or similar code with a service ID for the services that were not assigned a broadcast code and/or discovery filter.

At 3, the relay WTRU (e.g., based on/in response to receiving the discovery response message from the ProSe function) stores the one or more discovery filters, one or more corresponding broadcast codes, the ProSe relay code(s) (relay service broadcast code), and may store related service IDs from the discovery response. The relay WTRU begins (e.g., PC5) discovery by monitoring using the received discovery filter(s).

The service utilizing WTRU (WTRU2) and the service provider WTRU (WTRU1) may perform discovery procedures with the ProSe function. At 4, the service utilizing WTRU (WTRU2) may communicate a discovery request to the ProSe function. The service utilizing WTRU (WTRU2) may receive a response, which may include discovery filters. At 5, the service utilizing WTRU may start a monitoring process to listen for the broadcasted code using the received discovery filters.

At 6, the service provider WTRU (WTRU1) may communicate a discovery request to the ProSe function and may receive a response, which may include a ProSe broadcast code which may be referred to as a service broadcast code. The ProSe broadcast code (service broadcast code) received may be a ProSe application code. At 7, the service provider WTRU (WTRU1) may broadcast (e.g., begin broadcasting) the received ProSe broadcast code, e.g., ProSe application code (service broadcast code). The service utilizing WTRU may be monitoring and listening for the broadcast code (service broadcast code) using the received discovery filters.

The relay WTRU may uses discovery filters (e.g., received from the ProSe function during the Relay WTRU's discovery procedure) to monitor for the ProSe broadcast code (service broadcast code) being broadcasted by the service provider WTRU. Referring to FIG. 5, at 8, the relay WTRU monitors for for and detect/discover the ProSe broadcast code (service broadcast code) being broadcast by the service provider WTRU, if the received ProSe broadcast code (service broadcast code) satisfies or matches one or more of the discovery filters. The relay WTRU detects the ProSe broadcast code (service broadcast code) from the service provider WTRU (WTRU1). The relay WTRU begins broadcasting the ProSe relay code (relay service broadcast code) (e.g., received from the ProSe function during discovery), based on the detection of the ProSe broadcast code (service broadcast code). The discovery of the broadcast code (service broadcast code) from the service provider WTRU acts as a trigger for the relay WTRU to announce the ProSe relay code (relay service broadcast code)

At 9, the service utilizing WTRU may discover or detect the ProSe relay code (relay service broadcast code) being broadcast by the relay WTRU, for example, using the discovery filters the service utilizing WTRU received from the ProSe function during discovery. The service utilizing WTRU may communicate a match report to the ProSe function, for example, in response to detecting the relay WTRU's ProSe relay code (relay service broadcast code).

In some examples, the ProSe code (service broadcast code) received/broadcasted by the service provider WTRU (e.g., the ProSe application code) may be different from the ProSe code that is received/broadcasted by the relay WTRU (e.g., the ProSe relay code (relay service broadcast code)). In some examples, the ProSe function may assign the same code to the relay WTRU and the service provider WTRU. The relay WTRU may (e.g., if the relay WTRU and the service provider WTRU are assigned the same code) broadcast additional information with the ProSe code (e.g., over the PC5 interface), for example, to indicate that the code is being broadcasted by a relay WTRU,

Service discovery is performed, as described above, using a relay WTRU. A relay WTRU may request and, as described above, broadcasts a ProSe relay code (relay service broadcast code) for ProSe relay service. The relay WTRU monitors, as described above, ProSe services to be relayed. The relay WTRU may report available ProSe services to be relayed to the ProSe function. A service utilizing WTRU may discover certain ProSe services, for example, by querying the ProSe function. The ProSe function may respond, for example, by providing the ProSe relay code (relay service broadcast code) of the relay WTRU that reported (e.g., previously discovered) the ProSe Service and/or that may be configured to relay the ProSe service. The service utilizing WTRU may discover the relay WTRU, for example, by listening for the ProSe relay code (relay service broadcast code).

A relay WTRU may request a ProSe relay service from a ProSe function. A request may indicate the ProSe services for which the relay WTRU may operate as a relay. For example, a request may include a list of one or more ProSe application IDs corresponding to services for which the relay WTRU may operate as a relay.

The relay WTRU may receive (e.g., in response to a request) a ProSe relay code (relay service broadcast code) for the ProSe relay service. The relay WTRU begins, as described above, broadcasting the ProSe relay code (relay service broadcast code). The relay WTRU broadcasts, as descibed above, the ProSe relay code (relay service broadcast code) after detecting an available ProSe code to be relayed. As descibed above, the relay WTRU begins broadcasting the ProSe relay code (relay service broadcast code) after detecting the ProSe app code (service broadcast code) broadcasted by the service provider WTRU.

The relay WTRU receives, as described above, (e.g., from the ProSe function) a discovery filter for ProSe services to be relayed. The relay WTRU monitors, as described above, the ProSe app code on an (e.g., a PC5) interface using the discovery filter. The Relay WTRU detects, as descibed above, a ProSe app code (service broadcast code) that matches or otherwise satisfies the received discovery filter. The Relay WTRU may report (e.g., to the ProSe function) one or more discovered ProSe services to be relayed.

The service utilizing WTRU may generate and send a request to discover ProSe service(s) to the ProSe function. The request may specify discovery of a relayed ProSe relay service. The service utilizing WTRU may receive in response a discovery filter for one or more ProSe app codes (service broadcast codes) (e.g., broadcast by one or more service provider WTRUs) and one or more discovery filters for one or more ProSe relay codes (relay service broadcast codes) (e.g., broadcasted by one or more relay WTRUs). The service utilizing WTRU may monitor for ProSe app codes (service broadcast codes) and ProSe relay codes (relay service broadcast codes) on an (e.g., a PC5) interface, for example, using the received discovery filters.

The service utilizing WTRU may report a discovered ProSe relay service to ProSe function, for example, if the detected ProSe relay code (relay service broadcast code) matches the discovery filter. The service utilizing WTRU may receive ProSe app IDs from the relay WTRU. The service utilizing WTRU may receive one or more relay validity timers for a (e.g., each) ProSe app ID received from the relay WTRU. The timers may indicate, for example, how long the corresponding ProSe app ID is valid with the relay WTRU from which the ProSe app ID was received. The service utilizing WTRU may send a match report request to re-request a valid ProSe app ID, for example, if a relay validity timer expires.

The ProSe function may receive a ProSe relay service request from the relay WTRU, The ProSe function may (e.g., in response to the request) allocate a ProSe relay code (relay service broadcast code) for the ProSe relay service. The ProSe function may receive a ProSe app ID list to be relayed from the relay WTRU, The ProSe function may communicate to the relay WTRU the ProSe relay code (relay service broadcast code) and a discovery filter for ProSe app ID list.

The ProSe function may receive a match report from the relay WTRU. The match report may include one or more ProSe app codes (service broadcast codes). The ProSe function may identify and store the ProSe app ID list discovered by the relay WTRU, for example, based on the received ProSe app codes.

The ProSe function may receive monitor requests from service utilizing WTRUs. A monitor request may include a ProSe app ID. A monitor request may indicate the request is to discover a relayed ProSe service. The ProSe Function may provide a discovery filter for a ProSe relay code (relay service broadcast code) to the service utilizing WTRU. The ProSe function may determine the relay WTRUs that may provide a relay service for a ProSe app ID (e.g., a relay WTRU that discovered the ProSe service) and may provide one or more discovery filters for ProSe relay code(s) (relay service broadcast code) of the determined relay WTRUs.

The ProSe function may receive a match report from a service utilizing WTRU. A match report may include a ProSe relay code (relay service broadcast code). The ProSe function may identify the relay WTRU and may provide a ProSe app ID list that may be relayed by the relay WTRU. The ProSe function may perform a MIC check, for example, if/when it receives a match report. The ProSe function may provide a relay validity timer for a (e.g., each) ProSe app ID to the service utilizing WTRU. The relay validity timer may indicate for how long the ProSe app ID is valid for the corresponding relay WTRU.

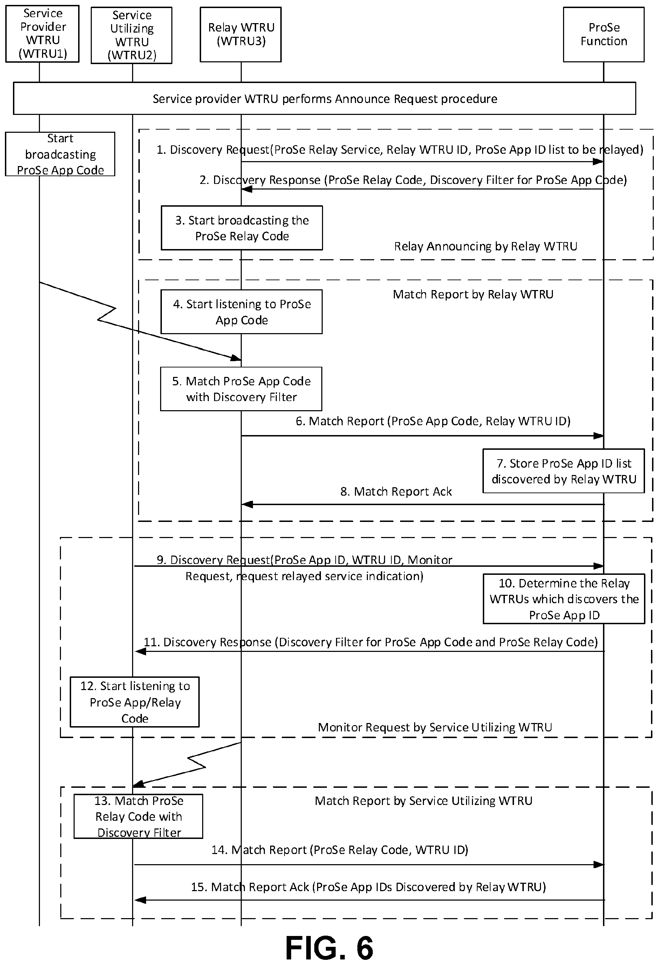

FIG. 6 depicts an example of relay WTRU service discovery. As shown in FIG. 6, a service provider WTRU may perform an announce request procedure. The service provider WTRU may broadcast a ProSe app code for the provided ProSe service. At 1, a relay WTRU may send a discovery request message, which may include a relay service indication and a ProSe app ID list to be relayed. At 2, the ProSe function may send a discovery response message, which may include a ProSe relay code and a discovery filter for the ProSe app code of the ProSe app IDs. The Relay WTRU may receive the ProSe Relay code. At 3, the relay WTRU may broadcast the ProSe relay code to announce the relay service.

At 4, the relay WTRU may begin to listen for ProSe app codes (e.g., on the PC 5 interface), for example, to determine whether there are any available ProSe services for relay in proximity to the relay WTRU. At 5, the relay WTRU may determine ProSe app code matches with or otherwise satisfies the received discovery filter. The relay WTRU may find an available ProSe service (e.g., the relay WTRU may detect the ProSe app code matches with the discovery filter). At 6, the relay WTRU may send a match report, which may include the detected ProSe app code and the relay WTRU ID. At 7, the ProSe function may determine the ProSe App ID, for example, based on the received ProSe app code. The ProSe function may store the ProSe service ID list for the relay WTRU. At 8, the ProSe function may send a match report acknowledgement (Ack) to the relay WTRU.

At 9, the service utilizing WTRU may request to discover a ProSe service, which may be identified by a ProSe app ID. The service utilizing WTRU may send a discovery request, which may include, for example, a ProSe app ID, a monitor request, and/or a request relayed service indication. At 10, the ProSe function may determine which relay WTRUs may be adapted to relay the service requested by the service utilizing WTRU. At 11, the ProSe function may send a discovery response, which may include a discovery filter for the relay WTRU (e.g., ProSe relay code) and a discovery filter for the service provider WTRU (e.g., ProSe app code). At 12, the service utilizing WTRU may start listening for the ProSe app code and ProSe relay code,

At 13, the service utilizing WTRU may match a detected ProSe app code or ProSe relay code with the received discovery filter information. The service utilizing WTRU may (e.g., in response to detecting the match) send a match report to the ProSe function. At 15, the ProSe function may send a match report Ack message to the service utilizing WTRU. The message may include the available ProSe services relayed by the relay WTRU. For example, the message may include the ProSe app IDs discovered by the relay WTRU.

A WTRU-to-WTRU discovery process may be implemented with security. A monitoring WTRU (M-WTRU) may be located outside of range of an announcing WTRU (A-WTRU) and may not be positioned to discover the announcing WTRU (A-WTRU) without assistance from a relay WTRU. A WTRU-to-WTRU relay, e.g., a relay WTRU (R-WTRU), may perform an enhanced open discovery procedure to enable the monitoring WTRU (M-WTRU) to discover a service provided by an announcing WTRU (A-WTRU) via the relay WTRU (R-WTRU) while providing security that may be equal to or better than security provided by an open discovery procedure that may not use a relay WTRU (R-WTRU).

A relay WTRU may generate a discovery request and communicate the discovery request to an HPLMN ProSe function. The discovery request may include a ProSe app ID, which may correspond to an announcing WTRU provided service. A discovery request may indicate that the relay WTRU seeks to act as a relay for a (e.g., an indicated) service. A relay WTRU may (e.g., in response) receive a relay Prose app code that may map to the announcing WTRU service (e.g., ProSe app ID) and a relay discovery key that may be used to protect the relay ProSe app code during transmission over the (e.g., PC5) interface. The relay WTRU may receive a discovery filter, which may include the ProSe app code used by the announcing WTRU, a discovery key, and/or one or more time related parameters for security checks of (e.g., PC5) messages from the announcing WTRU.

The relay WTRU may detect the ProSe app code transmitted by the announcing WTRU, for example, in a first (e.g., PC5) discovery message, using the discovery filter. The message may be received with a first MIC. The relay WTRU may check the (e.g., PC5) discovery message for integrity and freshness, for example, by verifying the MIC (e.g., locally) using the discovery key and the received time related parameters. The Relay WTRU may (e.g., if the discovery message passes the security check(s)), include a relay ProSe app code in a second (e.g., PC5) discovery message. The relay WTRU may protect the message, for example, by computing a second MIC, e.g., using the relay discovery key and time-based parameters. The relay WTRU may transmit the second (e.g., PC5) discovery message, for example, with the second MIC. A monitoring WTRU may detect the relay ProSe app code and may complete the discovery procedure. The relay code value may be identical to the non-relay code, for example, except for one or more reserved bits. The reserved bits, if set, may enable identification as a relay code and a (e.g., single) discovery filter, which may include a ProSe application mask configured to match a relay code and associated non relay codes. The (e.g., single) discovery filter may be provisioned to a monitoring WTRU,

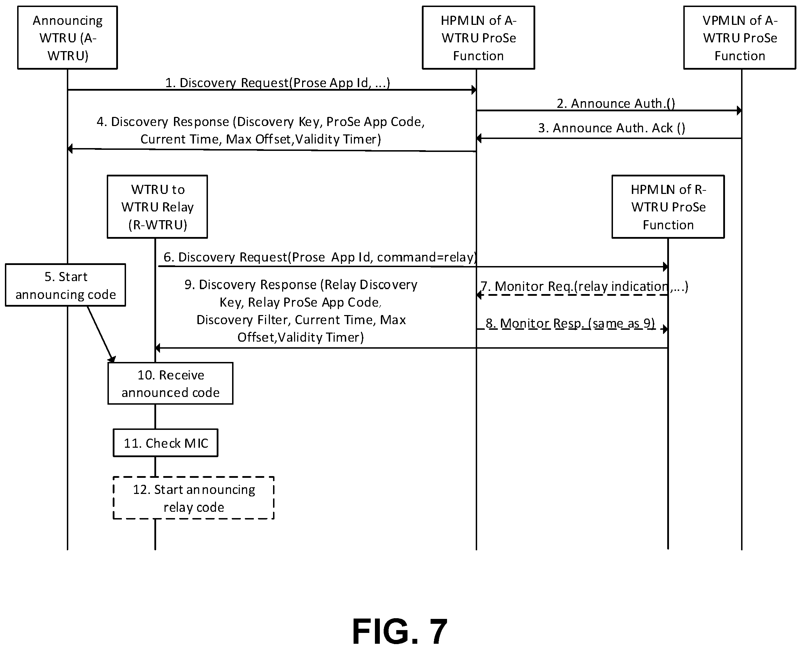

FIG. 7 depicts an example associated with secure open discovery using a relay WTRU. Referring to FIG. 7, at 1, the announcing WTRU may generate a discovery request and may communicate the request to the ProSe function. The discovery request may comprise a ProSe app ID (e.g., in addition to other parameters). At 2 and 3, the ProSe function may authorize the announcing WTRU. At 4, the announcing WTRU may receive the discovery response from the ProSe function. The discovery response may include a discovery key, for example, in addition to a ProSe app code, a current time, a maximum offset, and/or a validity timer.

At 5, the announcing WTRU may initiate announcing the ProSe app code in a (e.g., PC5) message. The announcing WTRU may compute a MIC for the message, for example, using the discovery key and a (e.g., UTC) time based counter. The announcing WTRU may transmit the computed MIC with the announce message.

At 6, the relay WTRU may initiate a discovery procedure as a WTRU to WTRU relay with the HPLMN ProSe function. The relay WTRU may generate a discovery request that may include the same ProSe app ID used by the announcing WTRU. The relay WTRU may indicate (e.g., in a value in a command field) an intent to operate as a relay WTRU (e.g., as opposed to an announcing WTRU or a monitoring WTRU, which may be selectable options for each WTRU). The relay WTRU may use a separate "relay" indication to inform the ProSe function that the relay WTRU seeks to relay the provided service.

At 7, the relay ProSe function may send a message, which may include the ProSe app ID (e.g., along with the relay indication) to a second ProSe function in another PLMN (e.g., a local PLMN ProSe function, an announcing WTRU HPLMN ProSe function), for example, if the ProSe App ID has a PLMN-specific scope. At 8, the second ProSe function may return, for example, a relay discovery key, a relay ProSe app code, a discovery filter (e.g., with the same ProSe app code and an associated discovery key provided to the announcing WTRU), and/or time related parameters.

At 9, the relay WTRU may receive a relay discovery key and a relay ProSe app code in a discovery response message from the ProSe function. The message may include a discovery filter with the same ProSe app code and associated discovery key provided to the announcing WTRU, and one or more time related parameters. The relay WTRU may receive multiple discovery filters. A (e.g., each) discovery filter may include a code and a key for a given service, for example, if multiple announcing WTRUs announce the same service.

At 10, the relay WTRU may receive a (e.g., PC5) discovery message, e.g., along with a MIC from the announcing WTRU. The relay WTRU may detect a match with the ProSe app code, for example, using the discovery filter.

At 11, the relay WTRU may check (e.g., locally check) the message for integrity and freshness, for example, using the MIC, the discovery key, and/or the time related parameters.

The (e.g., PC5) discovery message may pass the security checks. The relay WTRU may include the relay ProSe app code in a (e.g., PC5) discovery message, compute a MIC over the discovery message using the relay discovery key, and transmit the message with the MIC. The monitoring WTRU may detect the relay ProSe app code, for example, as part of a procedure to discover the service provided by the announcing WTRU. As shown in FIG. 7, at, 12, the relay WTRU may start announcing the relay code.

In some (e.g., additional and/or alternative) examples, a security check of a (e.g., PC5) discovery message from the announcing WTRU may be performed, for example, by the ProSe function (e.g., rather than locally by the relay WTRU). The relay WTRU may initiate a discovery procedure. The relay WTRU may receive a discovery filter for the same ProSe app code provided to the announcing WTRU in a discovery response message. The message may not include a discovery key, relay discovery key, and/or a relay ProSe app code.

The relay WTRU may receive a (e.g., PC5) discovery message, for example, along with a MIC from the announcing WTRU. The relay WTRU may detect a match with the ProSe app code, for example, using the discovery filter. The relay WTRU may determine (e.g., based on the absence of a provisioned discovery key) that a check of the MIC may be performed by the ProSe function (e.g., rather than locally by the relay WTRU). The relay WTRU may send the ProSe app code and MIC (e.g., in a match report message) to the ProSe function,

The ProSe function may retrieve a discovery key, for example, using the ProSe app code. The ProSe function may check the MIC using the discovery key. The ProSe function may (e.g., if the MIC check is successful) send, and the relay WTRU may receive, a relay ProSe app code and a relay discovery key (e.g., in a match report acknowledgment message). The relay WTRU may include the relay ProSe app code in a protected (e.g., PC5) discovery message, for example, as described herein.

A monitoring WTRU may be configured to (e.g., selectively) use a relay WTRU, for example, during the discovery of a service from an announcing WTRU. The monitoring WTRU may down prioritize or ignore a discovered relay WTRU, for example, if the monitoring WTRU is in the range of an announcing WTRU. The monitoring WTRU may ignore a "noisy" relay. The monitoring WTRU may discover a relay WTRU and an announcing WTRU and may use both in conjunction. A monitoring WTRU may use redundant communication links, for example, for service reliability and/or service continuity while moving.

A monitoring WTRU may (e.g., seek to or determine to) discover an announcing WTRU while in range of both an announcing WTRU and a relay WTRU. The monitoring WTRU may delay the transmission of a match report (e.g., using a relay usage threshold timer), for example, if the monitoring WTRU detects that the relay ProSe app code may be from a relay WTRU. The monitoring WTRU may transmit the match report (e.g., including a relay ProSe app code from the relay WTRU), for example, upon expiration of a relay usage threshold timer. The monitoring WTRU may (e.g., immediately) transmit a match report, for example, if the monitoring WTRU detects the ProSe app code from the announcing WTRU. The monitoring WTRU may (e.g., upon transmission) stop the relay usage threshold timer (e.g., if running).

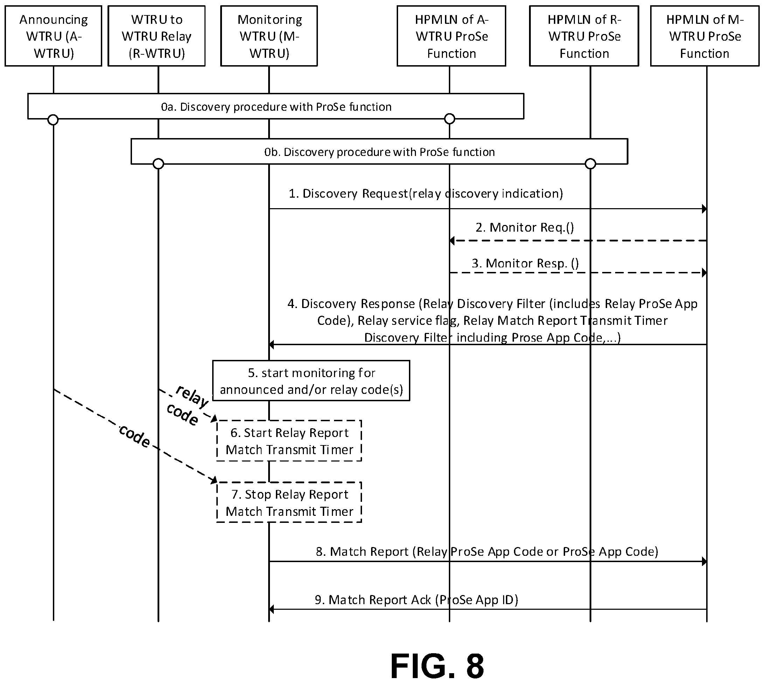

FIG. 8 illustrates an example of discovery prioritization (e.g., isolated direct discovery prioritization). FIG. 8 depicts an example open discovery flow using a WTRU to WTRU relay with a delayed match report by a monitoring WTRU. Referring to FIG. 8, at 0, an announcing WTRU and a relay WTRU may initiate a discovery procedure with their respective ProSe functions. The discovery procedure may be similar to one or more other discovery procedures described herein.

At 1, the monitoring WTRU may send a ProSe app ID and a relay discovery indication in a discovery request to the monitoring WTRU's HPLMN ProSe function. The relay discovery indication may inform the network that the monitoring WTRU may (e.g., has determined to) perform discovery of the service with respect to usage of a relay WTRU. The indication may convey one or more modes of operation, which may include, for example "without a relay WTRU" and "with a relay WTRU." A "without a relay WTRU" mode may indicate that the monitoring WTRU may perform the discovery of the service without a Relay WTRU. The application/service may involve or include isolated communications.

A "with a relay WTRU" mode may indicate the monitoring WTRU may use a relay WTRU in the discovery process. The indication may inform the network that the monitoring WTRU may (e.g., have determined to) prioritize isolated (e.g., non-relay) communications. There may be one or more (e.g., selectable) prioritization procedures. Prioritization may be based on a WTRU (e.g., WTRU-specific). Prioritization may employ a timer. Prioritization may be network controlled. Prioritization may include (e.g., use) multiple match report procedures. A prioritization procedure may be selected (e.g., by the network). Prioritization may be selected based on, for example, a ProSe app ID and/or a network policy. A WTRU (e.g., a monitoring WTRU) may be informed which prioritization procedure to select/perform, for example, based on the content of a discovery response message.

At 2, the monitoring WTRU ProSe function may (e.g., if the ProSe app ID has a PLMN-specific scope) send a message, which may include the ProSe app ID and/or a relay discovery indication, to a second ProSe function in another PLMN (e.g., a local PLMN ProSe function, announcing WTRU HPLMN ProSe function).

At 3, the second ProSe function may return a discovery filter and a relay discovery filter associated with the ProSe app ID. The relay discovery filter may include, for example, a relay ProSe app code, a relay service flag, and/or a relay match report (RMR) transmit timer.

At 4, the monitoring WTRU may receive a discovery filter and a relay discovery filter that may be associated with the ProSe app ID. The relay discovery filter may include, for example, the relay ProSe app code, the relay flag, and/or the RMR transmit timer. The monitoring WTRU may be provided with a (e.g., single) discovery filter, which may include, for example, a ProSe application mask capable of matching (e.g., configured to match) relay and non-relay codes. For example, the ProSe application mask may comprise a relay code value identical to a non-relay code (e.g., except for certain reserved "relay" bit(s) that may be set).

At 5, the monitoring WTRU may listen for the relay ProSe app code and/or the ProSe app code.

At 6, the monitoring WTRU may initiate the RMR transmit timer, for example, if the monitoring WTRU detects the relay ProSe app code from the relay WTRU (e.g., over the PC5 interface).

At 7, the monitoring WTRU may stop a running RMR transmit timer, for example, if the monitoring WTRU detects the ProSe app code from the announcing WTRU (e.g., over the PC5 interface).

At 8, the monitoring WTRU may send a match report message including the ProSe App Code, for example, if the ProSe app code was received (e.g., over PC5). The monitoring WTRU may send a match report including the relay ProSe app code, for example, if the RMR transmit timer has expired.

At 9, the monitoring WTRU may receive a match report acknowledgement, which may include a ProSe app ID and/or a relay flag. The flag may indicate whether the ProSe app ID is mapped to a relay ProSe app code. The monitoring WTRU may store (e.g., locally) a mapping of the ProSe app ID with the relay ProSe app code or ProSe app code.

The monitoring WTRU may send match report(s) (e.g., unconditionally and/or without delay), for example, if/when the monitoring WTRU detects the relay ProSe app code or the ProSe app code. The monitoring WTRU may receive a discovery response message, which may include an indication informing the WTRU that the network expects the monitoring WTRU to report relay and non-relay codes (e.g., if detected),

A monitoring WTRU may detect and report a first code (e.g., a relay code). The monitoring WTRU may (e.g., after detecting a first code) continue to monitor for a second code (e.g., non-relay code). The monitoring WTRU may send a second report, for example, if a second code is detected. The monitoring WTRU may decide to continue monitoring for a second code, for example, based on an indication from the ProSe function (e.g., in the first match report Ack). The WTRU may continue monitoring, for example, if the first code detected is a relay code. The WTRU may stop monitoring, for example, if the first code is a non-relay code,

A monitoring WTRU may send a match report (e.g., if the monitoring WTRU detects a second code). The monitoring WTRU may receive (e.g., in a match report Ack) mapping control information, which may indicate how to handle mapping(s) between detected codes and ProSe app IDs. The information may inform the WTRU to store multiple mappings or keep only one. Mapping control information may include a priority assigned for each of multiple codes, for example, if a mapping for multiple (e.g., both) codes is to be stored. A code priority may be used (e.g., by a monitoring WTRU), for example, to select between an announcing WTRU and/or a relay WTRU to consume a service. For example, a monitoring WTRU may (e.g., be instructed to) use a non-relay code with a relay code as a backup, or vice-versa (e.g., to set up direct communication with one over the other or both). Mapping control information may inform a monitoring WTRU to override existing code mapping (e.g., override relay code mapping with non-relay code mapping), for example, if one mapping is (e.g., determined to be) used. A monitoring WTRU may (e.g., additionally and/or alternatively) receive a report match reject for a second code reported (e.g., a relay code reported after the non-relay code), for example, if the monitoring WTRU uses only one code mapping.

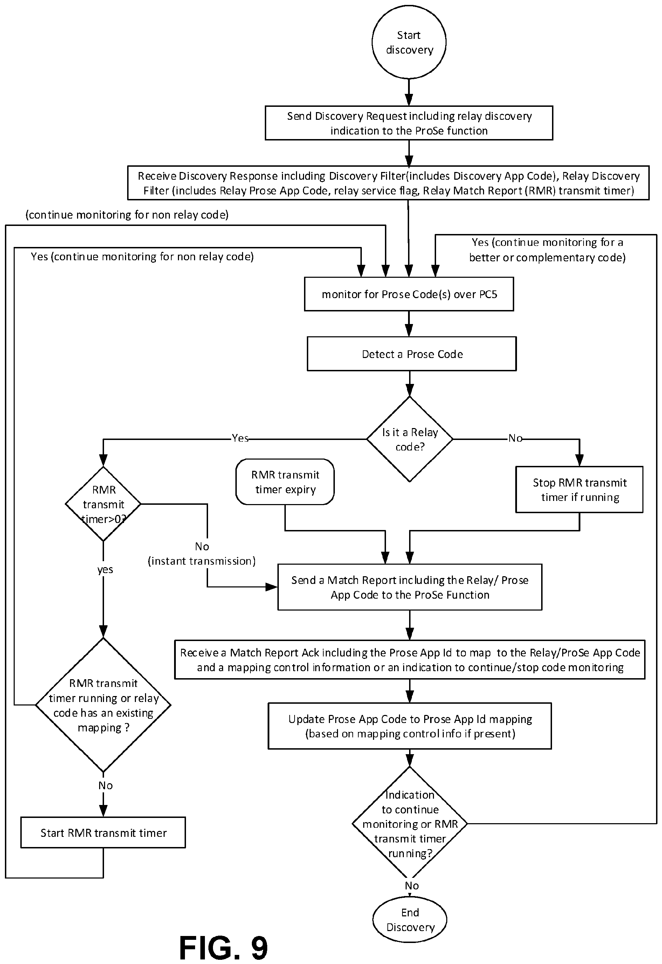

FIG. 9 depicts an example associated with a monitoring WTRU performing a (e.g., selective) discovery procedure for an announcing WTRU and/or a relay WTRU (e.g., as described herein).

Systems, methods, and instrumentalities are disclosed herein for WTRU to WTRU discovery via a relay WTRU. A relay WTRU may send a discovery request to a proximity services (ProSe) server. The discovery request may include, for example, a service identifier (ID), a relay capability indication, and/or a relay WTRU ID. The relay WTRU may receive a response, which may include a broadcast code and/or a discovery filter corresponding to the service ID. The relay WTRU may use the discovery filter to listen for a ProSe code, which may be broadcasted by a service provider WTRU. The relay WTRU may broadcast the ProSe code received from the ProSe server, for example, if the relay WTRU detects the ProSe code corresponding to the service provider WTRU. A service utilizing WTRU may listen to the relay WTRU and may receive the ProSe code. The service utilizing WTRU may utilize the relay WTRU to request the service from the service provider WTRU, for example, based on receiving (e.g., and using) the ProSe code.

It will be appreciated that while illustrative embodiments have been disclosed, the scope of potential embodiments is not limited to those explicitly set out. For example, while the system has been described with reference to a 3GPP, 5G, and/or NR network layer, the envisioned embodiments extend beyond implementations using a particular network layer technology. Likewise, the potential implementations extend to all types of service layer architectures, systems, and embodiments. The techniques described herein may be applied independently and/or used in combination with other resource configuration techniques.

It is understood that the entities performing the processes described herein may be logical entities that may be implemented in the form of software (e.g., computer-executable instructions) stored in a memory of, and executing on a processor of, a mobile device, network node or computer system. That is, the processes may be implemented in the form of software (e.g., computer-executable instructions) stored in a memory of a mobile device and/or network node, such as the node or computer system, which computer executable instructions, when executed by a processor of the node, perform the processes discussed. It is also understood that any transmitting and receiving processes illustrated in FIGs may be performed by communication circuitry of the node under control of the processor of the node and the computer-executable instructions (e.g., software) that it executes.

The various techniques described herein may be implemented in connection with hardware or software or, where appropriate, with a combination of both. Thus, the implementations and apparatus of the subject matter described herein, or certain aspects or portions thereof, may take the form of program code (e.g., instructions) embodied in tangible media including any other machine-readable storage medium wherein, when the program code is loaded into and executed by a machine, such as a computer, the machine becomes an apparatus for practicing the subject matter described herein. In the case where program code is stored on media, it may be the case that the program code in question is stored on one or more media that collectively perform the actions in question, which is to say that the one or more media taken together contain code to perform the actions, but that - in the case where there is more than one single medium - there is no requirement that any particular part of the code be stored on any particular medium. In the case of program code execution on programmable devices, the computing device generally includes a processor, a storage medium readable by the processor (including volatile and non-volatile memory and/or storage elements), at least one input device, and at least one output device. One or more programs that may implement or utilize the processes described in connection with the subject matter described herein, e.g., through the use of an API, reusable controls, or the like. Such programs are preferably implemented in a high level procedural or object oriented programming language to communicate with a computer system. However, the program(s) can be implemented in assembly or machine language, if desired. In any case, the language may be a compiled or interpreted language, and combined with hardware implementations.

Although example embodiments may refer to utilizing aspects of the subject matter described herein in the context of one or more stand-alone computing systems, the subject matter described herein is not so limited, but rather may be implemented in connection with any computing environment, such as a network or distributed computing environment. Still further, aspects of the subject matter described herein may be implemented in or across a plurality of processing chips or devices, and storage may similarly be affected across a plurality of devices. Such devices might include personal computers, network servers, handheld devices, supercomputers, or computers integrated into other systems such as automobiles and airplanes.

## Claims

1. A wireless transmit receive unit, WTRU, comprising:
a processor configured at least to:
send a discovery request, the discovery request indicating the WTRU is configured to operate as a relay for discovery of at least one service;
receive a discovery response, the discovery response comprising at least one discovery filter and at least one relay service broadcast code;
receive service broadcast codes; and
if the WTRU determines a received service broadcast code satisfies the at least one discovery filter,
broadcast the at least one relay service broadcast code.

2. The WTRU of claim 1,
wherein the discovery request comprises a relay identifier associated with the WTRU, an information element indicating that the WTRU is configured to operate as a relay for discovery of the at least one service, and at least one identifier associated with the at least one service.

3. The WTRU of claim 2, wherein the at least one relay service broadcast code corresponds to the at least one identifier associated with the at least one service.

4. The WTRU of claim 3, wherein the at least one relay service broadcast code is associated with a ProSe service.

5. The WTRU of claim 1,
wherein the discovery request comprises a plurality of identifiers associated with respective services; and
wherein the discovery response comprises a discovery filter and a relay service broadcast code for each of the plurality of identifiers.

6. The WTRU of claim 1, the processor further configured to:
store the at least one discovery filter and the at least one relay service broadcast code in association with an identifier associated with the at least one service.

7. The WTRU of claim 1, wherein the received service broadcast code determined to satisfy the at least one discovery filter is different than the at least one relay service broadcast code.

8. The WTRU of claim 1, wherein the received service broadcast code determined to satisfy the at least one discovery filter matches the at least one relay service broadcast code.

9. The WTRU of claim 8, the processor further configured to: broadcast data indicating the at least one relay service broadcast code is being broadcast by a relay WTRU.

10. The WTRU of claim 1, wherein the processor is further configured to:
send a second discovery request, the second discovery request indicating the WTRU is configured to operate as a relay for discovery of a second service;
receive a second discovery response, the second discovery response comprising a second discovery filter, a relay service broadcast code associated with the second service, a first cryptographic key, and a second cryptographic key;
receive a message comprising a second service broadcast code and a first integrity code;
determine the second service broadcast code satisfies the second discovery filter;
determine, based on the second service broadcast code, the first cryptographic key, and the first integrity code, that the message is valid; and
on a condition that the message is determined to be valid,
determine a second integrity code based on at least the relay service broadcast code associated with the second service and the second cryptographic key, and
send a discovery message comprising the relay service broadcast code associated with the second service and the second integrity code.

11. The WTRU of claim 10,
wherein the second discovery request comprises a code associated with the second service.

12. The WTRU of claim 1, wherein the processor is further configured to:
receive a relay filter, the relay filter configured to identify services to be relayed;
receive service broadcast codes; and
if a received service broadcast code that satisfies the relay filter is identified, send the received service broadcast code that satisfies the relay filter.

13. The WTRU of claim 12, wherein the processor configured to send the received service broadcast code that satisfies the relay filter is further configured to send the received service broadcast code that satisfies the relay filter to a ProSe function.

14. A method comprising:
sending, by a wireless transmit and receive unit, WTRU, a discovery request, the discovery request indicating the WTRU is configured to operate as a relay for discovery of at least one service;
receiving, by the WTRU, a discovery response, the discovery response comprising at least one discovery filter and at least one relay service broadcast code;
receiving, by the WTRU, service broadcast codes; and
if the WTRU determines a received service broadcast code satisfies the at least one discovery filter, broadcasting the at least one relay service broadcast code.

15. The method of claim 14, further comprising:
sending, by the WTRU, a second discovery request, the second discovery request indicating the WTRU is configured to operate as a relay for discovery of a second service;
receiving, by the WTRU, a second discovery response, the second discovery response comprising a second discovery filter, a relay service broadcast code associated with the second service, a first cryptographic key, and a second cryptographic key;
receiving, by the WTRU, a message comprising a second service broadcast code and a first integrity code;
determining, by the WTRU, the second service broadcast code satisfies the second discovery filter;
determining, by the WTRU, based on the second service broadcast code, the first cryptographic key, and the first integrity code, that the message is valid; and
on a condition that the message is determined to be valid,
determining a second integrity code based on at least the relay service broadcast code associated with the second service and the second cryptographic key, and
sending a discovery message comprising the relay service broadcast code associated with the second service and the second integrity code.

## Patentansprüche

1. Drahtlos-Sende- und -Empfangseinheit (Wireless Transmit/Receive Unit, WTRU), die umfasst:
einen Prozessor, der mindestens für Folgendes konfiguriert ist:
Senden einer Feststellungsanforderung, wobei die Feststellungsanforderung angibt, dass die WTRU dafür konfiguriert ist, als ein Relais für die Feststellung mindestens eines Dienstes zu fungieren;
Empfangen einer Feststellungsantwort, wobei die Feststellungsantwort mindestens ein Feststellungsfilter und mindestens einen Relaisdienst-Rundsende-Code enthält;
Empfangen von Dienst-Rundsende-Codes; und
falls die WTRU bestimmt, dass ein empfangener Dienst-Rundsende-Code das mindestens eine Feststellungsfilter erfüllt, Rundsenden des mindestens einen Relaisdienst-Rundsende-Codes.

2. WTRU nach Anspruch 1,
wobei die Feststellungsanforderung einen der WTRU zugeordneten Relais-Identifikator, ein Informationselement, das angibt, dass die WTRU dafür konfiguriert ist, als ein Relais für die Feststellung des mindestens einen Dienstes zu fungieren, und mindestens einen dem mindestens einen Dienst zugeordneten Identifikator umfasst.

3. WTRU nach Anspruch 2, wobei der mindestens eine Relaisdienst-Rundsende-Code dem mindestens einen Identifikator, der dem mindestens einen Dienst zugeordnet ist, entspricht.

4. WTRU nach Anspruch 3, wobei der mindestens eine Relaisdienst-Rundsende-Codes einem ProSe-Dienst zugeordnet ist.

5. WTRU nach Anspruch 1,
wobei die Feststellungsanforderung mehrere Identifikatoren umfasst, die jeweiligen Diensten zugeordnet sind; und
wobei die Feststellungsantwort ein Feststellungsfilter und eines Relaisdienst-Rundsende-Code für jeden der mehreren Identifikatoren umfasst.

6. WTRU nach Anspruch 1, wobei der Prozessor des Weiteren konfiguriert zum:
Speichern des mindestens einen Feststellungsfilters und des mindestens einen Relaisdienst-Rundsende-Codes in Zuordnung zu einem Identifikator, der dem mindestens einen Dienst zugeordnet ist.

7. WTRU nach Anspruch 1, wobei sich der empfangene Dienst-Rundsende-Code, von dem bestimmt wurde, dass er das mindestens eine Entdeckungsfilter erfüllt, von dem mindestens einen Relaisdienst-Rundsende-Code unterscheidet.

8. WTRU nach Anspruch 1, wobei der empfangene Dienst-Rundsende-Code, von dem bestimmt wurde, dass er das mindestens eine Entdeckungsfilter erfüllt, mit dem mindestens einen Relaisdienst-Rundsende-Code übereinstimmt.

9. WTRU nach Anspruch 8, wobei der Prozessor des Weiteren dafür konfiguriert ist, Daten rundzusenden, die angeben, dass der mindestens eine Relaisdienst-Rundsende-Code durch eine Relais-WTRU rundgesendet wird.

10. WTRU nach Anspruch 1, wobei der Prozessor des Weiteren konfiguriert ist zum:
Senden einer zweiten Feststellungsanforderung, wobei die zweite Feststellungsanforderung angibt, dass die WTRU dafür konfiguriert ist, als ein Relais für die Feststellung eines zweiten Dienstes zu fungieren;
Empfangen einer zweiten Feststellungsantwort, wobei die zweite Feststellungsantwort ein zweites Feststellungsfilter, einen dem zweiten Dienst zugeordneten Relaisdienst-Rundsende-Code, einen ersten kryptografischen Schlüssel und einen zweiten kryptografischen Schlüssel umfasst;
Empfangen einer Nachricht, die einen zweiten Dienst-Rundsende-Code und einen ersten Integritätscode umfasst;
Bestimmen, dass der zweite Service-Rundsende-Code das zweite Feststellungsfilter erfüllt;
Bestimmen, auf der Grundlage des zweiten Dienst-Rundsende-Codes, des ersten kryptografischen Schlüssels und des ersten Integritätscodes, dass die Nachricht valid ist; und
unter der Bedingung, dass bestimmt wird, dass die Nachricht valid ist,
Bestimmen eines zweiten Integritätscodes auf der Grundlage mindestens des dem zweiten Dienst zugeordneten Relaisdienst-Rundsende-Codes und des zweiten kryptografischen Schlüssels, und
Senden einer Feststellungsnachricht, die den dem zweiten Dienst zugeordneten Relaisdienst-Rundsende-Code und den zweiten Integritätscode umfasst.

11. WTRU nach Anspruch 10,
wobei die zweite Feststellungsanforderung einen dem zweiten Dienst zugeordneten Code umfasst.

12. WTRU nach Anspruch 1, wobei der Prozessor des Weiteren konfiguriert ist zum:
Empfangen eines Relaisfilters, wobei das Relaisfilter dafür konfiguriert ist, weiterzugebende Dienste zu identifizieren;
Empfangen von Dienst-Rundsende-Codes; und
falls ein empfangener Dienst-Rundsende-Code, der das Relaisfilter erfüllt, identifiziert wird, Senden des empfangenen Dienst-Rundsende-Code, der das Relaisfilter erfüllt.

13. WTRU nach Anspruch 12, wobei der Prozessor, der dafür konfiguriert ist, den empfangenen Dienst-Rundsende-Code, der das Relaisfilter erfüllt, zu senden, des Weiteren dafür konfiguriert ist, den empfangenen Dienst-Rundsende-Code, der das Relaisfilter erfüllt, an eine ProSe-Funktion zu senden.

14. Verfahren, das umfasst:
Senden, durch eine Drahtlos-Sende- und -Empfangseinheit (Wireless Transmit/Receive Unit, WTRU), einer Feststellungsanforderung, wobei die Feststellungsanforderung angibt, dass die WTRU dafür konfiguriert ist, als ein Relais für die Feststellung mindestens eines Dienstes zu fungieren;
Empfangen, durch die WTRU, einer Feststellungsantwort, wobei die Feststellungsantwort mindestens ein Feststellungsfilter und mindestens einen Relaisdienst-Rundsende-Code enthält;
Empfangen, durch die WTRU, von Service-Rundsende-Codes; und
falls die WTRU bestimmt, dass ein empfangener Dienst-Rundsende-Code das mindestens eine Feststellungsfilter erfüllt, Rundsenden des mindestens einen Relaisdienst-Rundsende-Codes.

15. Verfahren nach Anspruch 14, das des Weiteren umfasst:
Senden, durch die WTRU, einer zweiten Feststellungsanforderung, wobei die zweite Feststellungsanforderung angibt, dass die WTRU dafür konfiguriert ist, als ein Relais für die Feststellung eines zweiten Dienstes zu fungieren;
Empfangen, durch die WTRU, einer zweiten Feststellungsantwort, wobei die zweite Feststellungsantwort ein zweites Feststellungsfilter, einen dem zweiten Dienst zugeordneten Relaisdienst-Rundsende-Code, einen ersten kryptografischen Schlüssel und einen zweiten kryptografischen Schlüssel umfasst;
Empfangen, durch die WTRU, einer Nachricht, die einen zweiten Dienst-Rundsende-Code und einen ersten Integritätscode umfasst;
Bestimmen, durch die WTRU, dass der zweite Service-Rundsende-Code das zweite Feststellungsfilter erfüllt;
Bestimmen, durch die WTRU, auf der Grundlage des zweiten Dienst-Rundsende-Codes, des ersten kryptografischen Schlüssels und des ersten Integritätscodes, dass die Nachricht valid ist; und
unter der Bedingung, dass bestimmt wird, dass die Nachricht valid ist,
Bestimmen eines zweiten Integritätscodes auf der Grundlage mindestens des dem zweiten Dienst zugeordneten Relaisdienst-Rundsende-Codes und des zweiten kryptografischen Schlüssels, und
Senden einer Feststellungsnachricht, die den dem zweiten Dienst zugeordneten Relaisdienst-Rundsende-Code und den zweiten Integritätscode umfasst.

## Revendications

1. Unité émettrice-réceptrice sans fil, WTRU, comprenant :
un processeur configuré au moins pour :
envoyer une demande de découverte, la demande de découverte indiquant que la WTRU est configurée pour fonctionner en tant qu'un relais pour une découverte d'au moins un service ;
recevoir une réponse de découverte, la réponse de découverte comprenant au moins un filtre de découverte et au moins un code de diffusion de service de relais ;
recevoir des codes de diffusion de service ; et
si la WTRU détermine qu'un code de diffusion de service reçu satisfait l'au moins un filtre de découverte, diffuser l'au moins un code de diffusion de service de relais.

2. WTRU selon la revendication 1,
dans laquelle la demande de découverte comprend un identifiant de relais associé à la WTRU, un élément d'information indiquant que la WTRU est configurée pour fonctionner en tant qu'un relais pour une découverte de l'au moins un service, et au moins un identifiant associé à l'au moins un service.

3. WTRU selon la revendication 2, dans laquelle l'au moins un code de diffusion de service de relais correspond à l'au moins un identifiant associé à l'au moins un service.

4. WTRU selon la revendication 3, dans laquelle l'au moins un code de diffusion de service de relais est associé à un service ProSe.

5. WTRU selon la revendication 1,
dans laquelle la demande de découverte comprend une pluralité d'identifiants associés à des services respectifs ; et
dans laquelle la réponse de découverte comprend un filtre de découverte et un code de diffusion de service de relais pour chacun de la pluralité d'identifiants.

6. WTRU selon la revendication 1, le processeur étant en outre configuré pour :
stocker l'au moins un filtre de découverte et l'au moins un code de diffusion de service de relais en association avec un identifiant associé à l'au moins un service.

7. WTRU selon la revendication 1, dans laquelle le code de diffusion de service reçu déterminé comme satisfaisant l'au moins un filtre de découverte est différent de l'au moins un code de diffusion de service de relais.

8. WTRU selon la revendication 1, dans laquelle le code de diffusion de service reçu déterminé comme satisfaisant l'au moins un filtre de découverte correspond à l'au moins un code de diffusion de service de relais.

9. WTRU selon la revendication 8, le processeur étant en outre configuré pour : diffuser des données indiquant que l'au moins un code de diffusion de service de relais est en cours de diffusion par une WTRU de relais.

10. WTRU selon la revendication 1, dans laquelle le processeur est en outre configuré pour :
envoyer une deuxième demande de découverte, la deuxième demande de découverte indiquant que la WTRU est configurée pour fonctionner en tant qu'un relais pour une découverte d'un deuxième service ;
recevoir une deuxième réponse de découverte, la deuxième réponse de découverte comprenant un deuxième filtre de découverte, un code de diffusion de service de relais associé au deuxième service, une première clé cryptographique et une deuxième clé cryptographique ;
recevoir un message comprenant un deuxième code de diffusion de service et un premier code d'intégrité ;
déterminer que le deuxième code de diffusion de service satisfait le deuxième filtre de découverte ;
déterminer, sur la base du deuxième code de diffusion de service, de la première clé cryptographique et du premier code d'intégrité, que le message est valide ; et
à condition que le message soit déterminé comme étant valide,
déterminer un deuxième code d'intégrité sur la base au moins du code de diffusion de service de relais associé au deuxième service et de la deuxième clé cryptographique, et
envoyer un message de découverte comprenant le code de diffusion de service de relais associé au deuxième service et le deuxième code d'intégrité.

11. WTRU selon la revendication 10,
dans laquelle la deuxième demande de découverte comprend un code associé au deuxième service.

12. WTRU selon la revendication 1, dans laquelle le processeur est en outre configuré pour :
recevoir un filtre de relais, le filtre de relais étant configuré pour identifier des services à relayer ;
recevoir des codes de diffusion de service ; et
si un code de diffusion de service reçu qui satisfait le filtre de relais est identifié, envoyer le code de diffusion de service reçu qui satisfait le filtre de relais.

13. WTRU selon la revendication 12, dans laquelle le processeur configuré pour envoyer le code de diffusion de service reçu qui satisfait le filtre de relais est en outre configuré pour envoyer le code de diffusion de service reçu qui satisfait le filtre de relais à une fonction ProSe.

14. Procédé comprenant :
l'envoi, par une unité émettrice-réceptrice sans fil, WTRU, d'une demande de découverte, la demande de découverte indiquant que la WTRU est configurée pour fonctionner en tant qu'un relais pour une découverte d'au moins un service ;
la réception, par la WTRU, d'une réponse de découverte, la réponse de découverte comprenant au moins un filtre de découverte et au moins un code de diffusion de service de relais ;
la réception, par la WTRU, de codes de diffusion de service ; et
si la WTRU détermine qu'un code de diffusion de service reçu satisfait l'au moins un filtre de découverte, la diffusion de l'au moins un code de diffusion de service de relais.

15. Procédé selon la revendication 14, comprenant en outre :
l'envoi, par la WTRU, d'une deuxième demande de découverte, la deuxième demande de découverte indiquant que la WTRU est configurée pour fonctionner en tant qu'un relais pour une découverte d'un deuxième service ;
la réception, par la WTRU, d'une deuxième réponse de découverte, la deuxième réponse de découverte comprenant un deuxième filtre de découverte, un code de diffusion de service de relais associé au deuxième service, une première clé cryptographique et une deuxième clé cryptographique ;
la réception, par la WTRU, d'un message comprenant un deuxième code de diffusion de service et un premier code d'intégrité ;
la détermination, par la WTRU, que le deuxième code de diffusion de service satisfait le deuxième filtre de découverte ;
la détermination, par la WTRU, sur la base du deuxième code de diffusion de service, de la première clé cryptographique et du premier code d'intégrité, que le message est valide ; et
à condition que le message soit déterminé comme étant valide,
la détermination d'un deuxième code d'intégrité sur la base au moins du code de diffusion de service de relais associé au deuxième service et de la deuxième clé cryptographique, et
l'envoi d'un message de découverte comprenant le code de diffusion de service de relais associé au deuxième service et le deuxième code d'intégrité.
